# EUROPEAN PATENT APPLICATION

(11) **EP 1 130 794 A2**
(43) Date of publication of application: **05.09.2001**
(21) Application number: 01104133.2
(22) Date of filing: 21.02.2001
(51) Int. Cl.: H04B 1/707

(54) **Communication terminal apparatus and cell search method**

(30) Priority: 29.02.2000 JP 2000054079
(71) Applicant: Matsushita Electric Industrial Co., Ltd., Kadoma-shi, Osaka 571-8501 (JP)
(72) Inventor: Arima, Takenobu, Yokosuka-shi, Kanagawa 239-0847 (JP)
(74) Representative: Grünecker, Kinkeldey, Stockmair & Schwanhäusser Anwaltssozietät

(57) **Abstract**

Threshold judging circuit 151 performs a threshold judgment on a correlation value output from each of search correlators 104-1 to 104-n. Rank determining circuit 152 ranks phases output from threshold judging circuit 151 in descending order of correlation value. Candidate path determining circuit 153 determines a phase with a high correlation value in the short integration as a candidate path to assign to one of search correlators 104-1 to 104-n sequentially, and outputs a control signal for generating an operation clock based on an assignment result to clock generator 106. Demodulation phase determining circuit 154 determines a candidate path with a highest correlation value in the long integration to be optimal for use in demodulation, and outputs a control signal for generating an operation clock based on a determined result to clock generator 106. It is thereby possible to perform a cell search fast without increasing a hardware scale.

## Description

### BACKGROUND OF THE INVENTION

### Field of the Invention

The present invention relates to a communication terminal apparatus and cell search method for use in a cellular system such as digital car telephone and portable telephone.

### Description of the Related Art

In a cellular system, when a communication terminal apparatus is turned on, a communication between a communication terminal apparatus and a base station apparatus is disconnected, or a base station to which a terminal apparatus is switched is specified in a handover, it is necessary for the communication terminal apparatus to specify a base station apparatus which currently exists the closest to the terminal apparatus and which is the most excellent to communicate. This is called a cell search. It is required to perform the cell search fast.

As a method for performing the cell search fast in a cellular system using a CDMA system, there is a method for at a first stage, dividing a phase into search windows of which the number is the same as correlators, detecting the correlation on a phase inside a search window over a short integration length sequentially (hereinafter referred to as short integration), and selecting a path (hereinafter referred to as candidate path) with a correlation value exceeding a threshold, and at a second stage, for detecting the correlation on the candidate path over a long integration length (hereinafter referred to as long integration).

When a communication terminal apparatus is moving at a high speed, or base station apparatuses are located close to each other due to a large number of subscribers in a large city or the like, the number of phases to search is increased, the peripheral cell environment changes fast and therefore the requirement for performing the cell search fast is further increased.

However, in a conventional communication terminal apparatus, since each correlator performs the long integration and short integration in an assigned search window, a correlator does not perform the long integration when a candidate path is not present in the assigned search window, while another correlator in which a plurality of candidate paths are present in an assigned window should perform the long integration a plurality of times, resulting in a problem that it takes a long time to perform the cell search.

In addition, increasing the number of correlators enables the cell search to be performed fast, however, the hardware scale is increased.

### SUMMARY OF THE INVENTION

It is an object of the present invention to provide a communication terminal apparatus and cell search method capable of performing a cell search fast without increasing a hardware scale.

The present invention achieves the above object by effectively using a search correlator in which a candidate path is not present in an assigned search window or a demodulation correlator.

### BRIEF DESCRIPTION OF THE DRAWINGS

The above and other objects and features of the invention will appear more fully hereinafter from a consideration of the following description taken in connection with the accompanying drawing wherein one example is illustrated by way of example, in which;
FIG.1 is a block diagram illustrating a configuration of a communication terminal apparatus according to a first embodiment of the present invention;
FIG.2 is a diagram to explain a cell search operation in the communication terminal apparatus according to the first embodiment of the present invention;
FIG.3 is another diagram to explain the cell search operation in the communication terminal apparatus according to the first embodiment of the present invention;
FIG.4 is a block diagram illustrating a configuration of a communication terminal apparatus according to a second embodiment of the present invention;
FIG.5 is a diagram to explain a cell search operation in the communication terminal apparatus according to the second embodiment of the present invention;
FIG.6 is a block diagram illustrating a configuration of a communication terminal apparatus according to a third embodiment of the present invention; and
FIG.7 is a diagram to explain a cell search operation in the communication terminal apparatus according to the third embodiment of the present invention.

### DETAILED DESCRIPTION OF THE PREFERRED EMBODIMENTS

Embodiments of the present invention will be described specifically below with reference to accompanying drawings.

### (First embodiment)

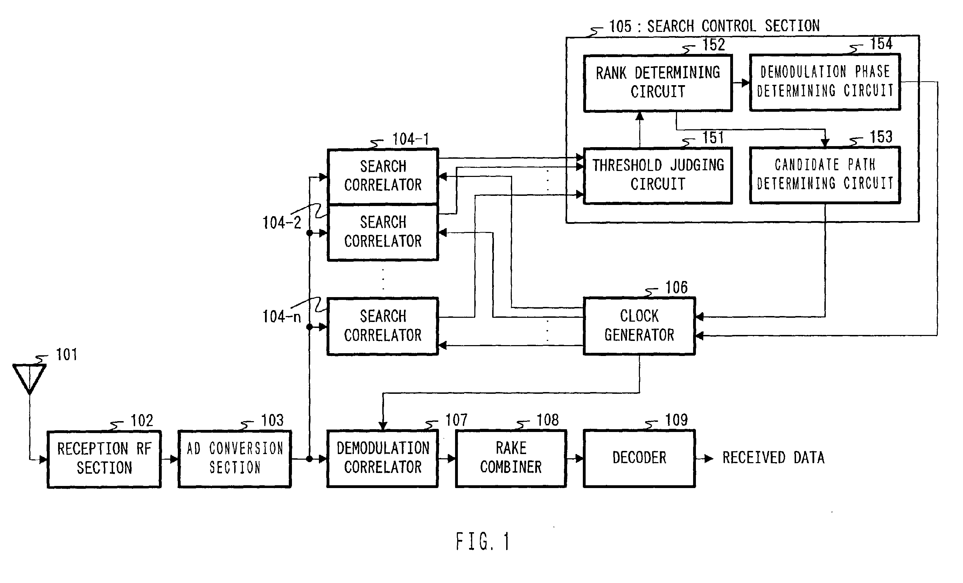

FIG.1 is a block diagram illustrating a configuration of a communication terminal apparatus according to the first embodiment of the present invention. A signal transmitted from a base station not shown is received at antenna 101 and input to reception RF section 102.

Reception RF section 102 converts an input received signal with a radio frequency into a baseband signal. AD conversion section 103 performs a conversion of an analog signal to a digital signal on the baseband signal output from reception RF section 102 . The digital signal output from AD conversion section 103 is input to search correlators 104-1 to 104-n and demodulation correlator 107.

Search correlators 104-1 to 104-n each performs correlation detection on the digital signal output from AD conversion section 103 at an operation clock input from clock generator 106 described later, and output a detected correlation value to search control section 105.

Search control section 105 determines a phase to detect the correlation in each of search correlators 104-1 to 104-n and demodulation correlator 107, and outputs a control signal to clock generator 106. In addition, a detailed internal configuration of search control section 105 is described later.

Clock generator 106 outputs the operation clock to each of search correlators 104-1 to 104-n and demodulation correlator 107 according to the control signal input from search control section 105.

Demodulation correlator 107 performs despreading processing on the digital signal output from AD conversion section 103 at the operation clock input form clock generator 106. RAKE combiner 108 performs RAKE combining on an output signal of demodulation correlator 107. Decoder 109 performs error correcting decoding on an output signal of RAKE combiner 108 to output received data.

The detailed internal configuration of search control section 105 is next explained. As illustrated in FIG.1, search control section 105 is mainly comprised of threshold judging circuit 151, rank determining circuit 152, candidate path determining circuit 153 and demodulation phase determining circuit 154.

Threshold judging circuit 151 performs a threshold judgment on the correlation value output from each of search correlators 104-1 to 104-n, and outputs the correlation value more than the threshold and the phase to rank determining circuit 152.

Rank determining circuit 152 ranks phases output from threshold judging circuit 151 in descending order of correlation value. Then, rank determining circuit 152 outputs a ranked phase to candidate path determining circuit 153 when its correlation value is based on the short integration, while outputting a ranked phase to demodulation phase determining circuit 154 when its correlation value is based on the long integration.

Candidate path determining circuit 153 determines a phase with a high correlation value in the short integration as a candidate path in descending order of correlation value, and assigns the candidate path to one of search correlators 104-1 to 104-n sequentially. Then, candidate path determining circuit 153 outputs a control signal for generating an operation clock based on an assignment result to clock generator 106. In addition, when the threshold judgment is performed and the number of phases with the correlation value exceeding the threshold is less than the number of correlators 104-1 to 104-n, unused correlators do not need to perform the long integration. It is thereby possible to suppress power consumption due to the long integration.

Demodulation phase determining circuit 154 determines a candidate path with the highest correlation value in the long integration to be optimal for use in demodulation. Then, the circuit 154 outputs a control signal for generating an operation clock based on a determined result to clock generator 106.

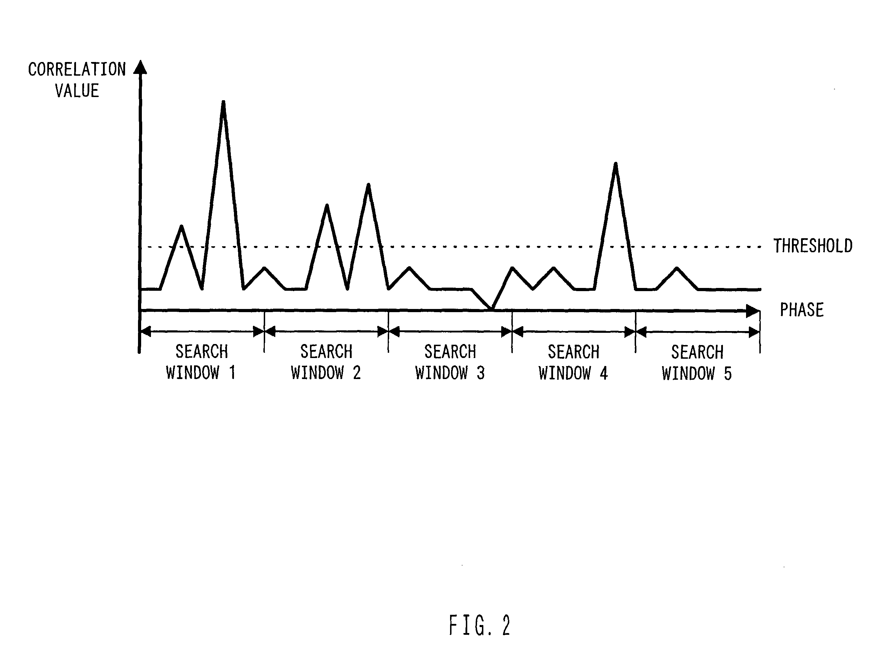

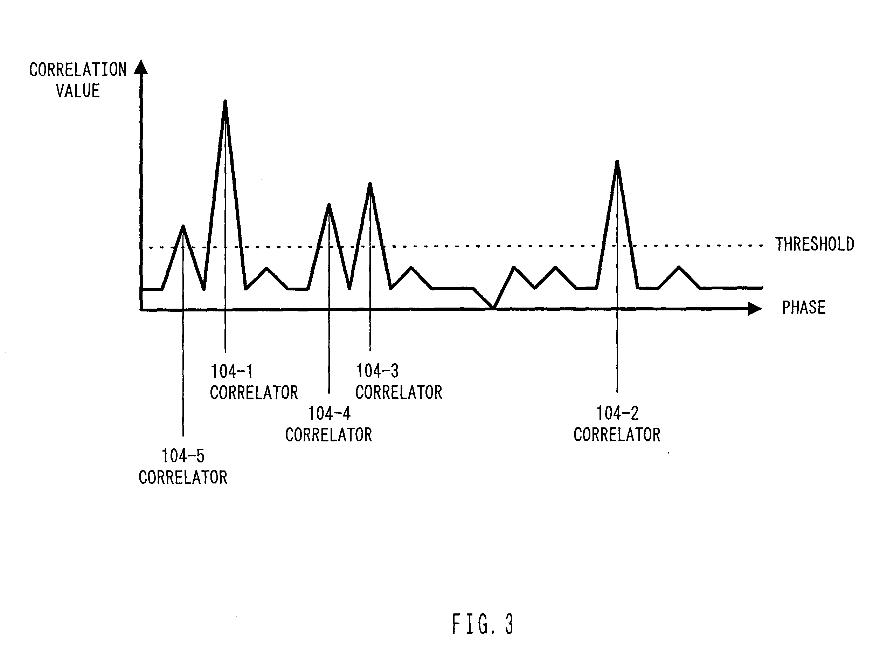

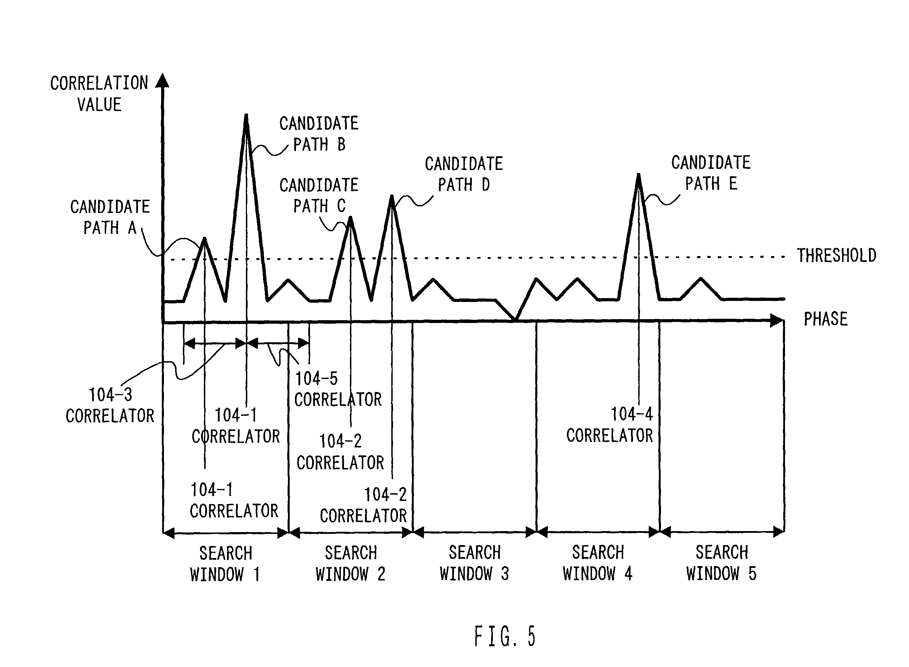

A cell search operation in the communication terminal apparatus illustrated in FIG.1 is next explained using FIGs.2 and 3. In addition, it is assumed in FIGs.2 and 5 that the number (n) of search correlators is "5".

As illustrated in FIG.2, an entire phase is divided into five search windows where "5" is the number of correlators, and each of search correlators 104-1 to 104-5 performs the short integration on all the phases in an assigned search window selected from search windows 1 to 5, and outputs the correlation value to search control section 105. As a result, correlation values on all the phases in the search windows are obtained.

The short integration has a short integration time to reduce a search time, therefore does not suppress interference and noise adequately and does not obtain the accuracy for performing a cell determination. Then, as illustrated in FIG.3, search control section 105 selects a phase with the correlation value exceeding a threshold in descending order of correlation value as a candidate path to assign to one of 104-1 to 104-5 sequentially.

Then, search control section 105 makes clock generator 106 generate an operation clock based on the assignment result to operate each of correlators 104-1 to 104-5. Each of correlators 104-1 to 104-5 performs on a respective candidate path the long integration for detecting the correlation value over a long integration time to obtain the accuracy for performing the cell determination, and outputs the correlation value to search control section 105.

Search control section 105 determines a candidate path with the highest correlation value obtained by the long integration to be optimal for use in demodulation.

Thus, the short integration is performed on every phase in each search window to judge with a threshed, a phase with the correlation value exceeding the threshold is assigned to a correlator sequentially and the long integration on the phase is performed. Therefore, when the number of candidate paths is less than the number of search correlators, a cell search can be performed by that each search correlator performs the long integration once and thereby the cell search can be performed fast.

### (Second embodiment)

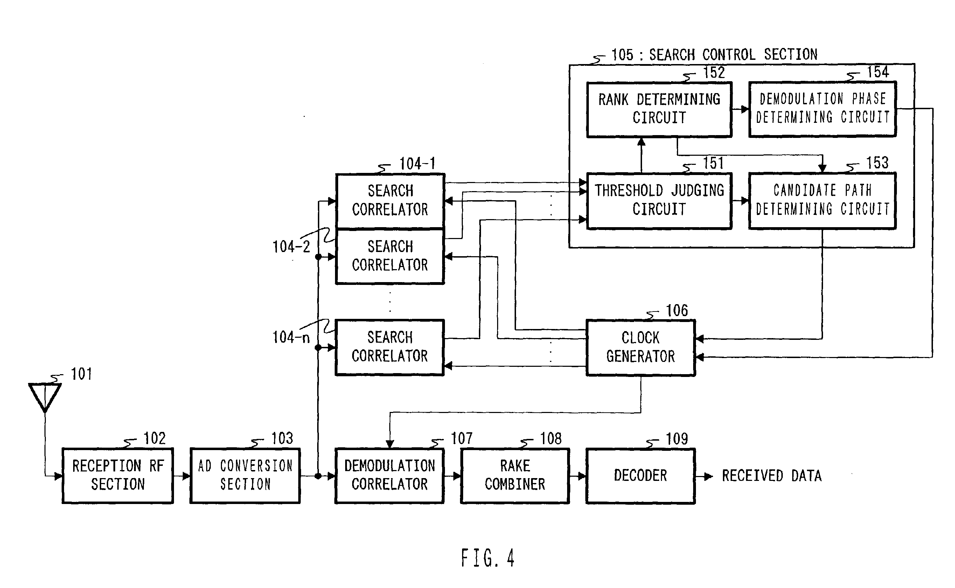

FIG.4 is a block diagram illustrating a configuration of a communication terminal apparatus according to the second embodiment of the present invention. In addition, in the communication terminal apparatus illustrated in FIG.4, structural sections common to those in the communication terminal apparatus illustrated in FIG.1 are assigned the same reference numerals as in FIG.1 and the explanations are omitted.

In the communication terminal apparatus illustrated in FIG.4, the operations in internal structural circuits of search control section 105 are different from those in the communication terminal apparatus illustrated in FIG.1.

Threshold judging circuit 151 performs a threshold judgment on the correlation value output from each of search correlators 104-1 to 104-n, and outputs the correlation value more than the threshold and the phase to rank determining circuit 152 and candidate path determining circuit 153.

Rank determining circuit 152 ranks phases output from threshold judging circuit 151 in descending order of correlation value. Then, rank determining circuit 152 outputs a ranked phase to candidate path determining circuit 153 when its correlation value is based on the short integration, while outputting a ranked phase to demodulation phase determining circuit 154 when its correlation value is based on the long integration.

Candidate path determining circuit 153 determines a phase with the correlation value more than the threshold in the short integration as a candidate path, and assigns the candidate path to one of correlators 104-1 to 104-n that is assigned a corresponding search window to which the candidate path belongs. Further, candidate path determining circuit 153 assigns a peripheral phase of a candidate path with the maximum level to some of search correlators 104-1 to 104-n in which a candidate path is not present on an assigned search window. Then, candidate path determining circuit 153 outputs a control signal for generating an operation clock based on an assignment result to clock generator 106.

Demodulation phase determining circuit 154 determines a candidate path with the highest correlation value in the long integration to be optimal for use in demodulation. Then, the circuit 154 outputs a control signal for generating an operation clock based on a determined result to clock generator 106.

A cell search operation in the communication terminal apparatus illustrated in FIG.4 is next explained using FIG.2 descried previously and FIG.5. In addition, it is assumed in FIGs.2 and 5 that the number (n) of search correlators is "5".

As illustrated in FIG.2, an entire phase is divided into five search windows where "5" is the number of correlators, and each of search correlators 104-1 to 104-5 performs the short integration on all the phases in an assigned search window selected from search windows 1 to 5, and outputs the correlation value to search control section 105. As a result, correlation values on all the phases in the search windows are obtained.

It is herein assumed that as a result of the short integration, a candidate path is not present in search window 3 and search window 5 respectively assigned to search correlators 104-3 and 104-5.

Search control section 105 selects a phase with the correlation value exceeding the threshold as a candidate path, and assigns the candidate path to either correlator 104-1, 104-2 or 104-4 that is assigned a corresponding search window to which the candidate path belongs. Further, search control section 105 assigns a peripheral phase of the candidate path with the maximum level to each of correlators 104-3 and 104-5.

In the case of FIG.5, candidate paths A and B belong to search window 1, and therefore assigned to correlator 104-1. Similarly, candidate paths C and D are assigned to correlator 104-2, and candidate path E is assigned to correlator 104-4. Further, correlators 104-3 and 5 are assigned different peripheral phases of candidate path B that is the candidate path with the maximum level.

Then, search control section 105 makes clock generator 106 generate an operation clock based on the assignment result to operate each of correlators 104-1 to 104-5.

Each of correlators 104-1, 104-2 and 104-4 performs the long integration on an assigned candidate path, and outputs the correlation value to search control section 105. Further, each of correlators 104-3 and 104-5 performs the short integration on an assigned peripheral phase of the candidate path with maximum level, and outputs the correlation value to search control section 105.

Search control section 105 determines the candidate path with the highest obtained correlation value to be optimal for use in demodulation.

Thus, the short integration is performed on every phase in each search window to judge with a threshed, the long integration is performed on a phase with the correlation value exceeding the threshold and at the same time, the short integration is performed on a peripheral phase of the candidate path with the maximum level. Therefore it is possible to obtain a delayed wave present around the candidate path with the maximum level and to fast perform finger assignment in data demodulation.

### (Third embodiment)

Generally, during a period from the time a communication terminal apparatus is turned on to the time a cell search is finished, data is not demodulated and a demodulation correlator is not used. The third embodiment explains a case of using the demodulation correlator effectively to perform the cell search.

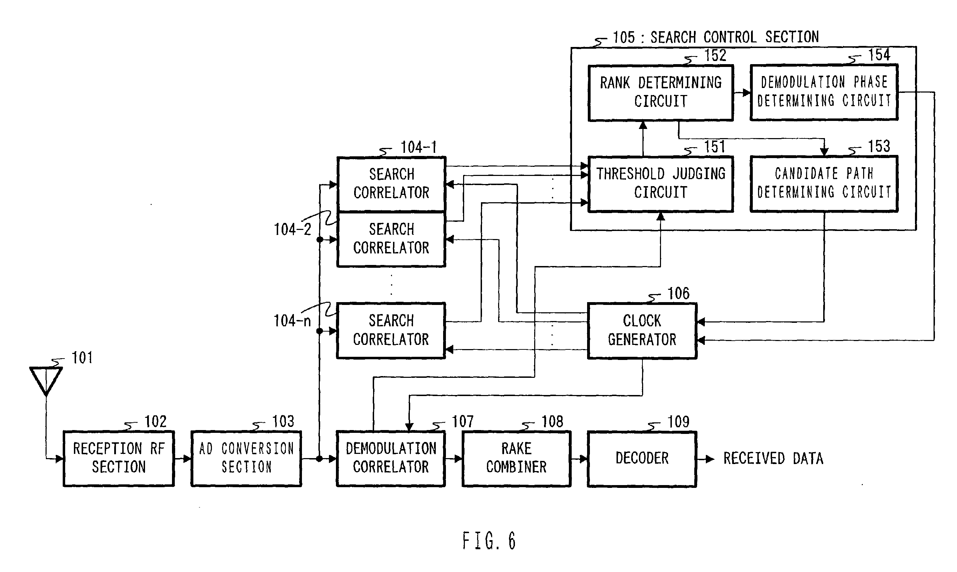

FIG.6 is a block diagram illustrating a configuration of a communication terminal apparatus according to the third embodiment of the present invention. In addition, in the communication terminal apparatus illustrated in FIG.6, structural sections common to those in the communication terminal apparatus illustrated in FIG.1 are assigned the same reference numerals as in FIG.1 and the explanations are omitted.

In the communication terminal apparatus illustrated in FIG.6, the operations in internal structural circuits of search control section 105 and in demodulation correlator 107 that outputs the correlation value to threshold judging circuit 151 of search control section 105 are different from those in the communication terminal apparatus illustrated in FIG.1.

Threshold judging circuit 151 performs a threshold judgment on the correlation value output from each of search correlators 104-1 to 104-n and demodulation circuit 107, and outputs the correlation value more than the threshold and the phase to rank determining circuit 152.

Rank determining circuit 152 ranks phases output from threshold judging circuit 151 in descending order of correlation value. Then, rank determining circuit 152 outputs a ranked phase to candidate path determining circuit 153 when its correlation value is based on the short integration, while outputting a ranked phase to demodulation phase determining circuit 154 when its correlation value is based on the long integration.

Candidate path determining circuit 153 determines a phase with the correlation value more than the threshold in the short integration as a candidate path, and assigns the candidate to each finger in demodulation correlator 107. Further, candidate path determining circuit 153 assigns a peripheral phase of a candidate path with the maximum level to each of correlators 104-1 to 104-n. Then, candidate path determining circuit 153 outputs a control signal for generating an operation clock based on an assignment result to clock generator 106. In addition, the number of fingers is the number of multipaths that RAKE combiner 108 is capable of combining.

Demodulation phase determining circuit 154 determines a candidate path with the highest correlation value in the long integration to be optimal for use in demodulation. Then, the circuit 154 outputs a control signal for generating an operation clock based on a determined result to clock generator 106.

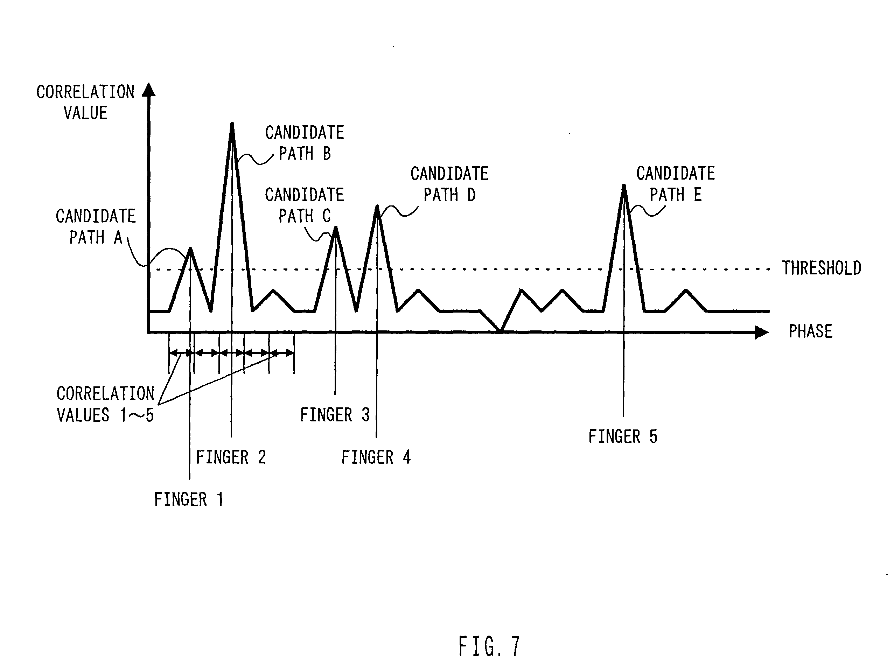

A cell search operation in the communication terminal apparatus illustrated in FIG.6 is next explained using FIG.2 described previously and FIG.7. In addition, it is assumed in FIGs.2 and 7 that the number (n) of search correlators and the number of fingers in the demodulation correlator is "5".

As illustrated in FIG.2, an entire phase is divided into five search windows where "5" is the number of correlators, and each of search correlators 104-1 to 104-5 performs the short integration on all the phases in an assigned search window selected from search windows 1 to 5, and outputs the correlation value to search control section 105. As a result, correlation values on all the phases in the search windows are obtained.

Then as illustrated in FIG.7, search control section 105 selects a phase with the correlation value exceeding the threshold as a candidate path in descending order of correlation value, and assigns the candidate path to each of fingers in demodulation correlator 107. Further, search control section 105 assigns a peripheral phase of candidate path B that is a candidate path with the maximum level to each of correlators 104-1 to 104-5.

Then, search control section 105 makes clock generator 106 generate an operation clock based on the assignment result to operate each of correlators 104-1 to 104-5 and demodulation correlator 107. Demodulation correlator 107 performs the long integration on each assigned candidate path, and outputs the correlation value to search control section 105. Each of correlators 104-1 to 104-5 performs the short integration on an assigned peripheral phase of the candidate path with the maximum level, and outputs the correlation value to search control section 105.

Search control section 105 determines a candidate path with the highest correlation value obtained in the long integration to be optimal for use in demodulation.

Thus, the long integration is performed using fingers in a demodulation correlator and at the same time, the short integration is performed on peripheral phases of the candidate path with the maximum level using search correlators. Therefore it is possible to obtain delayed waves present around the candidate path with the maximum level using the search correlators and to fast perform finger assignment in data demodulation.

In addition, while each above embodiment explains the case that the number of integration times to detect the correlation is 2, namely, the short integration and long integration, the present invention is not limited to this case, and is capable of having the same effect when the number of integration to detect the correlation is 3 or more.

As described above, according to the communication terminal apparatus and cell search method, a search correlator in which a candidate path is not present on an assigned search window or a demodulation correlator can be used efficiently to perform the long integration, and therefore it is possible to perform a cell search fast.

In addition, the present invention is not limited to capitalize on a cell search, and is capable of capitalizing on a pass search for a RAKE combining.

The present invention is not limited to the above described embodiments, and various variations and modifications may be possible without departing from the scope of the present invention.

This application is based on the Japanese Patent Application No.2000-054079 filed on February 29, 2000, entire content of which is expressly incorporated by reference herein.

## Claims

1. A communication terminal apparatus comprising:
a plurality of search correlation means (104-1~ 104-n) for performing correlation detection of a signal transmitted from a base station apparatus to be searched; and
search control means (105) for controlling a phase for each of said search correlation means to perform the correlation detection,
wherein said search control means makes each of said search correlation means calculate a first correlation value on every phase over a first integration time, selects a phase with the first correlation value more than a threshold in descending order of the first correlation value, makes each of said search correlation means calculate a second correlation value on a selected phase over a second integration time longer than the first integration time, and specifies a phase with a greatest second correlation value as a phase of the signal transmitted from the base station apparatus.

2. A communication terminal apparatus comprising:
a plurality of search correlation means (104-1~ 104-n) for performing correlation detection of a signal transmitted from a base station apparatus to be searched; and
search control means (105) for controlling a phase for each of said search correlation means to perform the correlation detection,
wherein said search control means makes each of said search correlation means calculate a first correlation value on every phase over a first integration time, compares the first correlation value with a threshold, makes some of said search correlation means calculate a second correlation value on a phase with the first correlation value more than the threshold over a second integration time longer than the first integration time, makes rest of said search correlation means that is not used in calculating the second correlation value calculate a third correlation value on a peripheral phase of a phase with a greatest first correlation value, specifies a phase with a greatest second correlation value as a phase of the signal transmitted from the base station apparatus, and specifies a phase of a delayed wave based on the third correlation value.

3. A communication terminal apparatus comprising:
a plurality of search correlation means (104-1~ 104-n) for performing correlation detection of a signal transmitted from a base station apparatus to be searched;
demodulation correlation means (107) for performing correlation detection of another signal transmitted from another base station apparatus currently communicating with said communication terminal apparatus; and
search control means (105) for controlling a phase for each of said search correlation means and said demodulation correlation means to perform the correlation detection,
wherein said search control means makes each of said search correlation means calculate a first correlation value on every phase over a first integration time, compares the first correlation value with a threshold, makes said demodulation means calculate a second correlation value on a phase with the first correlation value more than the threshold over a second integration time longer than the first integration time, makes each of said search correlation means calculate a third correlation value on a peripheral phase of a phase with a greatest first correlation value, specifies a phase with a greatest second correlation value as a phase of the signal transmitted from the base station apparatus to be searched, and specifies a phase of a delayed wave based on the third correlation value.

4. A cell search method, comprising:
performing first correlation detection of a transmitted signal to be searched over a first integration time on every phase;
comparing a first correlation value in the first correlation detection with a threshold;
performing second correlation detection on a phase with the first correlation value more than the threshold over a second integration time longer than the first integration time in descending order of the first correlation value; and
specifying a phase with a greatest second correlation value in the second correlation detection as a phase of the transmitted signal.

5. A cell search method, comprising:
performing first correlation detection of a transmitted signal to be searched over a first integration time on every phase;
comparing a first correlation value in the first correlation detection with a threshold;
performing second correlation detection on a phase with the first correlation value more than the threshold over a second integration time longer than the first integration time, while concurrently performing third correlation detection on a peripheral phase of a phase with a greatest first correlation value;
specifying a phase with a greatest second correlation value in the second correlation detection as a phase of the transmitted signal; and
specifying a phase of a delayed wave based on the third correlation value.

6. A cell search method, comprising:
performing in a first correlator first correlation detection of a transmitted signal to be searched over a first integration time;
comparing a first correlation value in the first correlation detection with a threshold;
performing in a second correlator second correlation detection on a phase with the first correlation value more than the threshold over a second integration time longer than the first integration time;
performing in said first correlator third correlation detection on a peripheral phase of a phase with a greatest first correlation value;
specifying a phase with a greatest second correlation value in the second correlation detection as a phase of the transmitted signal; and
specifying a phase of a delayed wave based on the third correlation value.
